# FASCICULE DE BREVET EUROPEEN

(11) **EP 2 254 791 B1**
(45) Date de publication et mention de la délivrance du brevet: **15.07.2015**
(21) Numéro de dépôt: 08853795.6
(22) Date de dépôt: 07.11.2008
(51) Int. Cl.: B64C 25/50

(54) **PROCEDE ET SYSTEME DE DESACTIVATION D'UN SYSTEME D'ORIENTATION D'UN TRAIN D'ATTERRISSAGE AVANT D'UN AERONEF**
VERFAHREN UND SYSTEM ZUR DEAKTIVIERUNG DES AUSRICHTUNGSSYSTEMS DES VORDEREN FAHRWERKS EINES FLUGZEUGS
METHOD AND SYSTEM FOR DEACTIVATING THE ORIENTATION SYSTEM OF THE FRONT LANDING GEAR OF AN AIRCRAFT

(30) Priorité: 13.11.2007 FR 0758993
(43) Date de publication de la demande: 01.12.2010
(73) Titulaire: AIRBUS OPERATIONS (SAS), 31060 Toulouse (FR)
(72) Inventeur: BAILBE, Noëlle, F-31490 Leguevin (FR); LAMOUSSIERE, Xavier, F-31200 Toulouse (FR)
(74) Mandataire: Gicquel, Olivier Yves Gérard
(86) Numéro de dépôt international: PCT/FR2008/052019
(87) Numéro de publication internationale: WO 2009/068801

(56) Documents cités:
- EP-A1- 1 964 772
- GB-A- 879 276
- US-A- 2 943 867
- US-A- 5 513 821
- US-A1- 2004 059 497

## Description

### Domaine de l'invention

L'invention concerne un procédé pour désactiver le système d'orientation du train d'atterrissage avant d'un aéronef lors du tractage de l'aéronef sur une zone de stationnement d'un aéroport. L'invention concerne également un système mettant en oeuvre ce procédé.

L'invention trouve des applications dans le domaine de l'aéronautique et, en particulier, dans le domaine de la surveillance de l'état des systèmes d'orientation des trains d'atterrissage, lorsque l'aéronef est au sol.

### Etat de la technique

Lorsqu'un aéronef est au sol, par exemple sur une zone de stationnement d'un aéroport, il est nécessaire, dans certains cas, de déplacer l'aéronef. Il peut être nécessaire, par exemple, de déplacer un aéronef lorsque celui-ci est en panne, ou pour sortir l'aéronef du parc de stationnement, ou encore pour le faire reculer, etc.

Pour déplacer un aéronef au sol, il est connu d'utiliser un véhicule de tractage, appelé aussi tracteur, qui tracte l'aéronef afin de le déplacer vers un emplacement particulier. Lors de ces phases de tractage, l'aéronef est tiré ou poussé par un véhicule de tractage connecté au train d'atterrissage avant de l'aéronef, appelé simplement train avant.

Le train avant d'un aéronef est orientable vers la droite et vers la gauche afin de permettre le déplacement de l'aéronef suivant des courbures, vers la droite ou vers la gauche, par rapport à un axe longitudinal de l'aéronef. Sur certains aéronefs, cette orientation du train avant est obtenue au moyen d'un système d'orientation. Ce système d'orientation comporte un circuit hydraulique associé à une commande élaborée par un calculateur, à partir d'entrées pilotes via une interface. La puissance mise à disposition du système d'orientation est fournie par le circuit hydraulique, qui peut également alimenter d'autres systèmes de l'aéronef. Ce système d'orientation peut être soit activé, soit désactivé.

Lorsque le système d'orientation est activé, le train avant est commandé par le pilote à partir d'une commande pilote installée dans le cockpit de l'aéronef. Lorsque le système d'orientation est désactivé, le train avant est libre, c'est-à-dire qu'il n'est plus commandé et peut alors suivre les mouvements imposés par un élément extérieur, par exemple un tractage par véhicule.

Généralement, l'activation et la désactivation du système d'orientation sont commandées à partir d'un dispositif de commande situé en extérieur de l'aéronef.

Le dispositif de commande du système d'orientation du train avant peut être, par exemple, un levier, ou toute autre manette située sur le train lui-même ou à proximité du train. Ce dispositif de commande, appelé par la suite levier, comporte un commutateur électrique qui, dans une position active (ou position fermée), permet d'activer le système d'orientation du train avant et, dans une position non-active (position ouverte), permet de désactiver ledit système d'orientation.

Lorsque le tracteur tracte l'aéronef, il est nécessaire que la commande du train ne soit pas active, c'est-à-dire que le système d'orientation soit désactivé, de façon à ce que le train avant soit libre en rotation. En effet, si la commande du train est active, c'est-à-dire si le système d'orientation n'est pas désactivé, alors ledit système d'orientation cherche à asservir le train à sa position neutre, ou position initiale, c'est-à-dire dans une position où son angle de rotation est nul. Alors, lorsqu'un tracteur tracte l'aéronef, le système d'orientation essaye de contrer les mouvements imposés par le tracteur, notamment dans les virages, ce qui force le système d'orientation du train et peut conduire à l'endommagement de certains éléments de l'aéronef. Les éléments endommagés peuvent être des pièces de structure du train avant ou bien un élément hydraulique du système d'orientation du train avant ou toute autre pièce utilisée dans la chaîne de commande du train avant.

Sur certains aéronefs, le système d'orientation du train est activé ou désactivé par un opérateur au sol qui positionne le levier formant le dispositif de commande dans un état ouvert ou fermé. Ce levier peut être monté sur un boîtier fixé sur le train avant de l'aéronef, ou à proximité du train avant.

En fonctionnement hors tractage, le levier est en position fermée, permettant ainsi au pilote de commander le système d'orientation du train. Le levier est maintenu dans sa position fermée pendant tout le temps de vol de l'aéronef et pendant tout le temps où l'aéronef se déplace tout seul au sol.

Lorsqu'un tractage doit être effectué, l'opérateur au sol doit déplacer le levier vers sa position ouverte afin de désactiver le système d'orientation du train. Le changement d'état du système d'orientation (activé ou désactivé) est commandé uniquement par l'opérateur au sol. Par mesure de sécurité, certains dispositifs de commande comportent un élément de verrouillage qui doit être mis en place pour verrouiller le dispositif de commande dans sa position ouverte ou fermée. Par exemple, cet élément de verrouillage peut être une goupille glissée dans une encoche pour assurer le maintien du levier dans sa position ouverte ou fermée.

Cependant, si l'opérateur au sol oublie de modifier la position du levier, si le levier reste bloqué dans sa position fermée, ou si l'opérateur oublie de fixer le levier au moyen de la goupille de sécurité et que le levier revient dans sa position fermée pendant la phase de tractage, alors le système d'orientation du train fonctionne comme s'il était activé, ce qui entraîne les risques de dommages du train ou du système d'orientation tels qu'expliqués précédemment. Quelle qu'en soit la cause, réactivation ou non désactivation du système d'orientation du train, le fait que ledit système d'orientation soit dans un état activé lors du tractage de l'aéronef peut être à l'origine d'importants dommages sur l'aéronef.

### Exposé de l'invention

L'invention a justement pour but de remédier aux inconvénients des techniques exposées précédemment. A cette fin, l'invention propose un procédé permettant de désactiver automatiquement le système d'orientation du train avant d'un aéronef lorsque certaines conditions sont réunies, ces conditions laissant supposer que l'aéronef est entrain d'être tracté . Pour cela, le procédé de l'invention propose de détecter un mouvement de rotation du train avant lorsque l'aéronef est dans des conditions de tractage. En effet, si, dans des conditions de tractage, le procédé détecte que le train avant est en rotation, alors il est supposé que ce mouvement de rotation est provoqué par un véhicule de tractage. L'invention propose alors de désactiver le système d'orientation de façon à éviter tout dommage.

De façon plus précise, l'invention concerne un procédé de désactivation d'un système d'orientation d'un train d'atterrissage avant d'un aéronef selon la revendication 1.

L'invention peut comporter une ou plusieurs des caractéristiques suivantes :
- le système d'orientation est désactivé lorsque les conditions (a) à (d) sont détectées pendant une durée supérieure à une durée seuil prédéterminée.
- un mouvement de rotation du train avant est détecté lorsqu'un angle de rotation dudit train est supérieur à un angle seuil prédéterminé et qu'il diverge de 0°.
- un mouvement de rotation du train avant est détecté lorsqu'une vitesse de rotation dudit train est supérieure à une vitesse seuil prédéterminée et que le mouvement s'écarte d'une position centrée dudit train.
- un mouvement de rotation du train d'atterrissage est détecté lorsqu'une valeur absolue d'un angle de rotation du train avant est supérieure à une valeur seuil prédéterminée.

L'invention concerne également un système pour mettre en oeuvre le procédé décrit ci-dessus. Ce système de désactivation se caractérise par les caractéristiques de la revendication 5.

Le système de l'invention peut comporter une ou plusieurs des caractéristiques suivantes :
- il comporte un circuit logique apte à contrôler un état d'activation ou de désactivation du système d'orientation.
- le circuit logique comporte une entrée recevant une information de position angulaire du train avant, une entrée recevant une information de commande pilote, une entrée recevant une information relative à l'état du système d'orientation, et une entrée recevant des informations relatives à des conditions de tractage de l'aéronef.

L'invention concerne également un aéronef dans lequel le procédé de l'invention est mis en oeuvre.

### Brève description des dessins

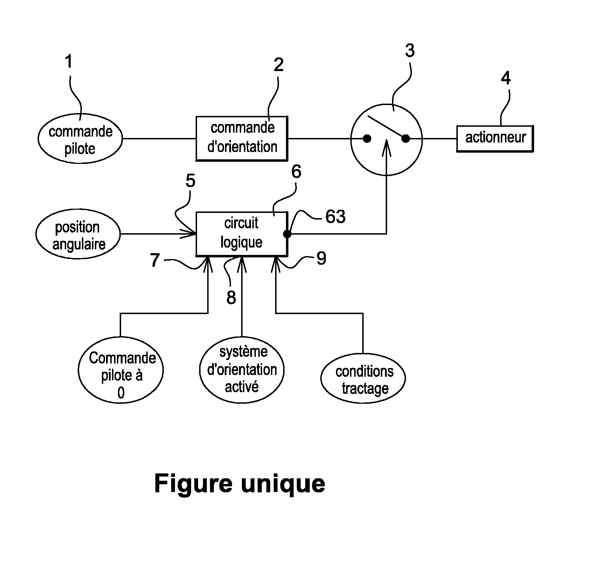

La figure unique représente un diagramme fonctionnel du procédé de l'invention.

### Description détaillée de modes de réalisation de l'invention

Dans la plupart des aéronefs, le train avant est commandé, en sortie et en orientation, au moyen d'un circuit hydraulique, lui-même commandé par le pilote à partir d'une commande située dans le cockpit et appelée commande pilote.

Comme expliqué précédemment, le système d'orientation de l'aéronef peut être activé ou désactivé à partir d'un dispositif de commande. Ce dispositif de commande peut se présenter sous la forme d'un levier installé dans un boîtier fixé sur le train avant ou proche du train avant. Ce levier permet de faire commuter un commutateur d'une position fermée vers une position ouverte. Lorsque l'aéronef est prêt à être tracté par un véhicule de tractage, l'opérateur au sol doit déplacer le levier de sa position fermée vers sa position ouverte afin que le système d'orientation du train soit mis dans un état désactivé. Lorsqu'il est dans cet état désactivé, le système d'orientation est libre, c'est-à-dire qu'il n'est plus commandé par la commande pilote. L'aéronef peut donc être soumis au tractage sans risque de dommages.

L'invention propose un procédé qui permet de désactiver le système d'orientation du train dès lors que ce système d'orientation est activé alors qu'un mouvement de rotation du train et des conditions de tractage ont été détectés. L'invention prend donc en compte des conditions spécifiques dues au tractage de l'aéronef. Ces conditions de tractage peuvent être liées à l'état du système d'orientation ou liées à l'état de l'aéronef lui-même. La condition de tractage essentielle liée à l'état du système d'orientation est :
- la commande pilote relative au système d'orientation est en position neutre dans le cockpit de l'aéronef, ce qui signifie que le pilote pense être en mode désactivé.

Les conditions de tractage essentielles liées à l'aéronef lui-même sont les suivantes :
- l'aéronef est au sol (par opposition à un aéronef en vol) ;
- la vitesse de l'aéronef est faible, c'est-à-dire inférieure à une valeur de vitesse prédéterminée.

Les conditions de tractage correspondent donc au fait que l'aéronef doit être posé au sol, qu'il doit être à l'arrêt ou quasiment à l'arrêt et que le pilote ne doit pas être entrain de commander une rotation du train avant.

Il est à noter que d'autres conditions de tractage peuvent aussi être prises en compte en fonction, par exemple, du type de l'aéronef concerné, des conditions extérieures de l'aéroport sur lequel est posé l'aéronef, etc.

Le procédé de l'invention considère que, dans les conditions de tractage évoquées précédemment, si un mouvement de rotation du train est détecté, alors cela signifie que l'aéronef est entrain d'être tracté. Par conséquent, si le système d'orientation est détecté comme étant activé, il est nécessaire de désactiver ledit système d'orientation.

Dans le procédé de l'invention, on considère qu'il existe un mouvement de rotation lorsque l'angle de rotation du train avant est supérieur à un angle seuil prédéterminé et que cette valeur de l'angle diverge de 0°. Un mouvement de rotation est détecté lorsqu'une variation de l'angle de rotation est supérieure à une certaine valeur, dans le cas où cet angle s'écarte de la position centrée du train. On considère que la position centrée du train correspondant à la position du train avant lorsqu'il est aligné suivant l'axe longitudinal de l'aéronef.

En d'autres termes, le procédé de l'invention propose de désactiver automatiquement le système d'orientation du train lorsque les quatre critères suivants au moins sont réunis :
- système d'orientation est dans son état activé,
- aucune commande du système d'orientation du train n'est émise par le pilote (la commande pilote est à zéro),
- des conditions de tractage de l'aéronef ont été détectées, et
- un mouvement de rotation du train a été détecté, ce mouvement s'écartant de la position centrée du train.

Les différents critères énoncés précédemment pour déterminer si le système d'orientation doit être désactivé sont pris en compte s'ils sont confirmés pendant un certain temps. Autrement dit, le procédé de l'invention choisit de prendre en compte les différents critères lorsque ceux-ci ont été confirmés pendant une certaine durée, c'est-à-dire une durée supérieure à une durée seuil prédéterminée. Cette durée minimum est choisie de façon à sécuriser le procédé et, ainsi, éviter toute détection intempestive d'un état activé.

En d'autres termes, le procédé de l'invention propose de désactiver le système d'orientation lorsque :
- celui-ci a été détecté comme actif, c'est-à-dire que le circuit hydraulique de commande du train est sous pression bien que la commande pilote soit à zéro, que les conditions de tractage sont détectées, qu'une variation minimum de l'angle de rotation avec un angle qui s'écarte de la consigne à zéro est détectée, et que
- toutes ces conditions ont été confirmées pendant une certaine durée. Lorsque toutes ces conditions, au moins, sont confirmées, le système d'orientation du train avant est désactivé en dépressurisant le circuit hydraulique.

Il est à noter, toutefois, que la durée pendant laquelle ces différentes conditions doivent être confirmées peut être variable en fonction de l'aéronef concerné et, notamment, de la dynamique du système d'orientation de cet aéronef.

Le procédé de l'invention est représenté, sous une forme fonctionnelle, sur la figure. Plus précisément, la figure représente un diagramme fonctionnel montrant la façon dont les différents critères sont pris en compte, dans le procédé de l'invention, pour déterminer si le système d'orientation du train doit être désactivé. Cette figure montre schématiquement le système d'orientation commandé à partir de la commande pilote 1. Elle montre également un moyen de gestion de la désactivation 6 du système d'orientation. Ce moyen de gestion 6 est un circuit logique 6 recevant à ses entrées les critères suivants :
- l'entrée 5 reçoit la position angulaire du train avant,
- l'entrée 7 reçoit l'information de commande pilote à zéro, la commande pilote étant à zéro lorsque le pilote considère que, dans la situation considérée, ce n'est pas à lui de commander l'orientation du train,
- l'entrée 8 reçoit l'information relative à l'état du système d'orientation (activé ou désactivé), et
- l'entrée 9 reçoit les informations relatives aux conditions de tractage.

La logique de désactivation 6 peut être mise en oeuvre par un calculateur de l'aéronef. Dans un exemple d'architecture d'aéronef, le calculateur est un calculateur BSCU (Brakes and Steering Control Unit). La logique de désactivation 6 reçoit les différentes informations, citées précédemment, sous la forme de données binaires. Si chacune de ces informations est à 1, alors la logique de désactivation 6 émet un signal, par exemple un bit à 1, sur sa sortie 63.

La logique de désactivation 6 est connectée, par sa sortie 63, à un interrupteur 3. Cet interrupteur 3 est connecté entre le système de commande d'orientation 2 et un actionneur 4, monté, par exemple, en parallèle avec le levier de commande manuel. Dans l'exemple d'architecture cité précédemment, la commande du système d'orientation, le circuit logique et la commande d'une électrovanne, située en amont du circuit hydraulique, sont des éléments logiciels du calculateur BSCU. La désactivation du système d'orientation, qu'elle soit commandée de façon normale par le système, qu'elle soit due au passage en position ouverte du levier sur le train ou qu'elle soit due à la logique de désactivation, est toujours réalisée par ouverture de cette électrovanne.

L'interrupteur 3 est commandé par le signal provenant de la sortie 63 de la logique de désactivation 6. Lorsque la logique de désactivation 6 envoie un premier signal, par exemple à 0, à l'interrupteur 3, celui-ci se ferme. Tant que l'interrupteur 3 est fermé, le système d'orientation est activé ; il est commandé à partir de la commande pilote 1 et de la commande d'orientation 2. Lorsque la logique de désactivation 6 envoie un second signal, par exemple à 1, à l'interrupteur 3, celui-ci s'ouvre. Tant que l'interrupteur 3 est ouvert, le système d'orientation est désactivé. L'ouverture de l'interrupteur 3 entraîne un actionneur 4. Cet actionneur 4 désactive le système d'orientation en dépressurisant le circuit hydraulique par commande de l'électrovanne

Selon l'invention, les différents critères pris en compte pour la décision de désactivation sont déterminés par le calculateur de bord, par comparaison avec des valeurs seuils.

En particulier, un mouvement de rotation du train avant est détecté lorsque l'angle de rotation du train a une variation minimum. Cette variation de l'angle de rotation peut être déterminée à partir de l'angle de rotation lui-même. De préférence, elle est déterminée à partir de la vitesse de rotation du train avant, par comparaison avec une vitesse seuil prédéterminée. Cette valeur de vitesse seuil est déterminée par calcul, en fonction de la vitesse de rotation à partir de laquelle on estime qu'il y a un risque d'endommager les éléments du train. Dans ce cas, le seuil de rotation est donné en degrés par seconde.

Le critère lié à l'angle de rotation de l'aéronef prend en compte, non seulement la valeur de l'angle de rotation, mais également son sens. En effet, pour que ce critère soit considéré comme un des critères nécessitant la désactivation du système d'orientation, il faut que l'angle de rotation soit divergent, c'est-à-dire qu'il s'écarte de zéro. Cette condition supplémentaire permet d'éviter de détecter des cas où le pilote commanderait une remise vers le neutre après avoir effectué un virage.

Le critère relatif aux conditions de tractage peut prendre différentes formes, selon l'aéronef considéré et/ou les circonstances. Ces conditions de tractage peuvent être le fait que l'aéronef soit au sol ou encore que l'aéronef a une vitesse supérieure à une vitesse seuil prédéterminée, etc. Ces conditions peuvent être choisies séparément ou bien combinées les unes avec les autres.

Dans un mode de réalisation de l'invention, afin d'éviter une détection intempestive lorsque le train avant tourne légèrement autour de sa position neutre (dans la précision du système d'orientation), il est possible de rajouter une condition supplémentaire relative à la valeur absolue de l'angle de rotation du train avant par rapport à zéro. Cette condition apporte une précision quant à la détection d'un mouvement en rotation de l'aéronef. Cette condition est la suivante : si la valeur absolue de l'angle de rotation du train avant est supérieure à un certain seuil, et que tous les autres critères énoncés précédemment sont vérifiés, alors le système d'orientation doit être désactivé.

Dans un exemple de réalisation de l'invention, on choisit un seuil de rotation de 1 deg/s. Dans cet exemple, la vitesse seuil de l'aéronef est choisie égale à 10 m/s. Dans cet exemple, la désactivation du système d'orientation doit être réalisée lorsque le train avant a un mouvement de rotation supérieur à 1 deg/s et que la vitesse avion est inférieure à 10 m/s, les autres conditions étant bien entendues remplies (commande pilote à zéro et système d'orientation activé). Dans ce même exemple, on choisit un seuil de temps, c'est-à-dire une valeur de la durée pendant laquelle les conditions de désactivation doivent être confirmées, de 0,5 seconde.

Dans un mode de réalisation de l'invention, l'invention propose que chaque détection d'une mauvaise désactivation soit signalée au pilote et/ou enregistrée pour la maintenance afin de permettre une réparation ou une vérification plus conséquente du dispositif de commande du système d'orientation. En effet, si une désactivation du système d'orientation a été effectuée conformément au procédé de l'invention, cela signifie que la désactivation du système n'avait pas eu lieu au préalable et que, par conséquent, soit l'opérateur au sol n'a pas procédé à cette désactivation, soit le dispositif de commande manuel est défectueux.

Le procédé de l'invention tel que décrit précédemment est mis en oeuvre par un système de désactivation automatique. Ce système de désactivation comporte au moins un capteur de position angulaire. Ce capteur est apte à fournir des données angulaires relatives à la position du train avant. Un tel capteur fait généralement partie intégrante des dispositifs d'orientation des aéronefs. Ce capteur est relié à un calculateur, par exemple au calculateur BSCU qui a pour mission, notamment, de commander l'orientation du train d'atterrissage avant. Dans l'invention, ce calculateur comporte un circuit logique 3 permettant de contrôler l'état d'activation et de désactivation du système d'orientation à partir des différentes informations décrites précédemment. Ce circuit logique reçoit des informations mesurées et/ou détectées par différents moyens installés sur l'aéronef et utilise ces informations pour déterminer un dysfonctionnement de la commande du système d'orientation. Ainsi, dans l'invention, on ajoute, au calculateur en charge de la commande du système d'orientation, une fonction de surveillance du système d'orientation. Ainsi, dans l'invention, le calculateur est apte à déterminer l'existence d'un mouvement de rotation du train avant et à commander la désactivation du système d'orientation dudit train.

## Revendications

1. Procédé de désactivation automatique d'un système d'orientation d'un train d'atterrissage avant d'un aéronef lors d'un tractage au sol dudit aéronef, **caractérisé en ce qu'**il comporte les opérations de :
(a) détection d'un état activé du système d'orientation (2),
(b) détection d'une commande pilote relative au système d'orientation en position neutre (7),
(c) détection de conditions de tractage de l'aéronef (9), les conditions de tractage comprenant au moins un positionnement de l'aéronef au sol, une vitesse de déplacement de l'aéronef inférieure à une valeur prédéterminée et la commande pilote relative au système d'orientation en position neutre (7),
(d) détection, par un calculateur de bord, d'un mouvement de rotation du train avant (5), ce mouvement s'écartant d'une position centrée du train, et
(e) désactivation, par le calculateur de bord, du système d'orientation lorsque les opérations (a) à (d) sont vérifiées.

2. Procédé selon la revendication 1, **caractérisé en ce que** le système d'orientation est désactivé lorsque les conditions (a) à (d) sont détectées pendant une durée supérieure à une durée seuil prédéterminée.

3. Procédé selon la revendication 1 ou 2, **caractérisé en ce qu'**un mouvement de rotation du train avant est détecté lorsqu'un angle de rotation dudit train est supérieur à un angle seuil prédéterminé et qu'il diverge de 0°.

4. Procédé selon l'une quelconque des revendications 1 à 2, **caractérisé en ce qu'**un mouvement de rotation du train avant est détecté lorsqu'une vitesse de rotation dudit train est supérieure à une vitesse seuil prédéterminée et que le mouvement s'écarte d'une position centrée dudit train.

5. Système de désactivation automatique d'un système d'orientation d'un train d'atterrissage avant d'un aéronef lors d'un tractage au sol dudit aéronef, **caractérisé en ce qu'**il comporte :
- au moins un capteur de position angulaire fournissant des données angulaires, et
- un calculateur pour déterminer, dans des conditions de tractage et à partir des données angulaires, l'existence d'un mouvement de rotation du train avant, ce mouvement s'écartant d'une position centrée du train, et pour commander la désactivation du système d'orientation,
les conditions de tractage comprenant au moins un positionnement de l'aéronef au sol, une vitesse de déplacement de l'aéronef inférieure à une valeur prédéterminée et la commande pilote relative au système d'orientation en position neutre (7).

6. Système selon la revendication 5, **caractérisé en ce qu'**il comporte un circuit logique (3) apte à contrôler un état d'activation ou de désactivation du système d'orientation.

7. Système selon la revendication 6, **caractérisé en ce que** le circuit logique (3) comporte :
- un entrée (5) recevant une information de position angulaire du train avant,
- une entrée (7) recevant une information de commande pilote,
- une entrée (8) recevant une information relative à l'état du système d'orientation, et
- une entrée (9) recevant des informations relatives à des conditions de tractage de l'aéronef.

8. Aéronef, **caractérisé en ce qu'**il comporte des moyens mettant en oeuvre le procédé selon l'une quelconque des revendications 1 à 4.

## Patentansprüche

1. Verfahren zur automatischen Deaktivierung eines Ausrichtungssystems des vorderen Fahrwerks eines Flugzeugs bei einem Ziehen des Flugzeugs am Boden, **dadurch gekennzeichnet, dass** es die folgenden Schritte umfasst:
(a) Erfassung eines aktivierten Zustands des Ausrichtungssystems (2),
(b) Erfassung eines Steuerbefehls zum Ausrichtungssystem in neutraler Position (7),
(c) Erfassung von Ziehbedingungen des Flugzeugs (9), wobei die Ziehbedingungen mindestens eine Positionierung des Flugzeugs am Boden, eine Bewegungsgeschwindigkeit des Flugzeugs unter einem vorbestimmten Wert und den Steuerbefehl zum Ausrichtungssystem in neutraler Position (7) umfassen,
(d) durch einen Bordrechner Erfassung einer Drehbewegung des vorderen Fahrwerks (5), wobei sich diese Bewegung von einer zentrierten Position des Fahrwerks entfernt, und
(e) durch den Bordrechner Deaktivierung des Ausrichtungssystems, wenn die Schritte (a) bis (d) geprüft sind.

2. Verfahren nach Anspruch 1, **dadurch gekennzeichnet, dass** das Ausrichtungssystem deaktiviert wird, wenn die Bedingungen (a) bis (d) während einer längeren Dauer als eine vorbestimmte Schwellendauer erfasst werden.

3. Verfahren nach Anspruch 1 oder 2, **dadurch gekennzeichnet, dass** eine Drehbewegung des vorderen Fahrwerks erfasst wird, wenn ein Drehwinkel des Fahrwerks größer als ein vorbestimmter Schwellenwinkel ist, und wenn er um 0° divergiert.

4. Verfahren nach einem der Ansprüche 1 bis 2, **dadurch gekennzeichnet, dass** eine Drehbewegung des vorderen Fahrwerks erfasst wird, wenn eine Drehgeschwindigkeit des Fahrwerks größer als eine vorbestimmte Schwellengeschwindigkeit ist und sich die Bewegung von einer zentrierten Position des Fahrwerks entfernt.

5. System zur automatischen Deaktivierung eines Ausrichtungssystems eines vorderen Fahrwerks eines Flugzeugs bei einem Ziehen des Flugzeugs am Boden, **dadurch gekennzeichnet, dass** es umfasst:
- mindestens einen Winkelpositionsfühler, der Winkeldaten liefert, und
- einen Rechner, um unter Ziehbedingungen und auf Basis von Winkeldaten das Vorhandensein einer Drehbewegung des vorderen Fahrwerks zu bestimmen, wobei sich diese Bewegung von einer zentrierten Position des Fahrwerks entfernt, und u m die Deaktivierung des Ausrichtungssystems zu steuern,
wobei die Ziehbedingungen mindestens eine Positionierung des Flugzeugs am Boden, eine Bewegungsgeschwindigkeit des Flugzeugs unter einem vorbestimmten Wert und den Steuerbefehl zum Ausrichtungssystem in neutraler Position (7) umfassen.

6. System nach Anspruch 5, **dadurch gekennzeichnet, dass** es eine logische Schaltung (3) umfasst, die geeignet ist, einen Aktivierungs- oder Deaktivierungszustand des Ausrichtungssystems zu kontrollieren.

7. System nach Anspruch 6, **dadurch gekennzeichnet, dass** die logische Schaltung (3) umfasst:
- einen Eingang (5), der eine Winkelpositionsinformation des vorderen Fahrwerks empfängt,
- einen Eingang (7), der eine Steuerbefehlsinformation empfängt,
- einen Eingang (8), der eine Information zum Zustand des Ausrichtungssystems empfängt, und
- einen Eingang (9), der Informationen zu Ziehbedingungen des Flugzeugs empfängt.

8. Flugzeug, **dadurch gekennzeichnet, dass** es Mittel umfasst, die das Verfahren nach einem der Ansprüche 1 bis 4 einsetzen.

## Claims

1. Method for automatically deactivating a system for orientating a front landing gear of an aircraft when the said aircraft is being towed along the ground, **characterized in that** it comprises the operations of:
(a) detecting that the orientation system (2) is in an activated state,
(b) detecting that a pilot control relating to the orientation system is in a neutral position (7),
(c) detecting conditions that the aircraft is being towed (9), the towing conditions comprising at least that the aircraft is positioned on the ground, that the rate of travel of the aircraft is below a predetermined value and that the pilot control relating to the orientation system is in the neutral position (7),
(d) detecting, using an onboard computer, a rotational movement of the front landing gear (5), this movement deviating from the landing gear being in a centred position, and
e) deactivating, using the onboard computer, the orientation system when operations (a) to (d) are satisfied.

2. Method according to Claim 1, **characterized in that** the orientation system is deactivated when conditions (a) to (d) are detected for a duration lasting longer than a predetermined threshold duration.

3. Method according to Claim 1 or 2, **characterized in that** a rotational movement of the front landing gear is detected when an angle of rotation of the said landing gear is greater than a predetermined threshold angle and is diverging from 0°.

4. Method according to either one of Claims 1 and 2, **characterized in that** a rotational movement of the front landing gear is detected when a rate of rotation of the said landing gear is above a predetermined threshold rate and the movement is deviating from a position in which the said landing gear is centred.

5. System for automatically deactivating a system for orientating a front landing gear of an aircraft when the said aircraft is being towed along the ground, **characterized in that** it comprises:
- at least one angular-position sensor providing angular data, and
- a computer for determining, under towing conditions and from the angular data, the existence of a rotational movement of the front landing gear, this movement deviating from a position in which the landing gear is centred, and for commanding deactivation of the orientation system,
the towing conditions comprising at least that the aircraft is positioned on the ground, that the rate of travel of the aircraft is below a predetermined value and that the pilot control relating to the orientation system is in the neutral position (7).

6. System according to Claim 5, **characterized in that** it comprises a logic circuit (3) able to control a state of activation or deactivation of the orientation system.

7. System according to Claim 6, **characterized in that** the logic circuit (3) comprises:
- an input (5) receiving information regarding the angular position of the front landing gear,
- an input (7) receiving information regarding the pilot control,
- an input (8) receiving information regarding the status of the orientation system, and
- an input (9) receiving information relating to conditions of towing of the aircraft.

8. Aircraft, **characterized in that** it comprises means implementing the method according to any one of Claims 1 to 4.
